(19) Europäisches Patentamt
European Patent Office
Office européen des brevets

(11) **EP 1 431 796 B1**

(12) **EUROPÄISCHE PATENTSCHRIFT**

(45) Veröffentlichungstag und Bekanntmachung des Hinweises auf die Patenterteilung:
**15.03.2006 Patentblatt 2006/11**

(51) Int Cl.:
*G02B 21/02* *(2006.01)*      *G02B 15/17* *(2006.01)*

(21) Anmeldenummer: **03024243.2**

(22) Anmeldetag: **22.10.2003**

(54) **Zoomsystem**

Zoom system

Système de zoom

(84) Benannte Vertragsstaaten:
**DE FR GB**

(30) Priorität: **25.10.2002 DE 10249702**

(43) Veröffentlichungstag der Anmeldung:
**23.06.2004 Patentblatt 2004/26**

(73) Patentinhaber: **Leica Microsystems (Schweiz) AG 9435 Heerbrugg (CH)**

(72) Erfinder:
• **Sander, Ulrich, Dr. 9445 Rebstein (CH)**

• **Pozivil, Thomas 9434 Au/Sg (CH)**

(74) Vertreter: **Reichert, Werner Franz Leica Microsystems AG, Corporate Patents + Trademarks Department, Ernst-Leitz-Strasse 17-37 35578 Wetzlar (DE)**

(56) Entgegenhaltungen:
DE-A- 19 837 135      US-A- 3 127 466
US-A- 5 671 094

**Beschreibung**

Die Erfindung betrifft ein Zoomsystem, beispielsweise für ein Operationsmikroskop.

Zoomsysteme, also variable Vergrößerungs-Systeme, werden heute in fast jedem Operationsmikroskop eingesetzt. Ein wichtiger Vertreter dafür ist das M690 (Leica Prospekt: Ophthalmologie M1-602-Ode-1.94-SCH, Drucklegung Januar 1994).

Das Zoomsystem in diesem bekannten Mikroskop besteht aus einer geraden Anzahl optischer Glieder. Es hat einen viergliedrigen Aufbau und ist symmetrisch aufgebaut. Je zwei Linsengruppen sind identisch und die Gruppen zueinander spiegelbildlich angeordnet. Die zwei äußeren Linsengruppen sind unbeweglich, die zwei inneren Gruppen beweglich angeordnet. Die zwei äußeren Linsengruppen weisen eine positive Brechkraft, die zwei inneren eine negative Brechkraft auf. Dadurch wird sowohl eine Fokussierung wie auch eine Veränderung der Vergrößerung möglich.

Der Erfinder erkannte, dass die heute bestehenden Systeme verbesserungsfähig sind in Bezug auf Farbfehler, insbesondere die des sekundären Spektrums, sowie hinsichtlich der Bildfeldwölbung und des Astigmatismus. Ebenso ist es ein Wunsch, die Baulänge klein zu halten, ohne auf einen großen Zoomfaktor verzichten zu müssen.

Aus der Offenlegunsschrift DE 19837135 A1 sind ebenfalls afohale Zoomsysteme bekannt.

Ausgehend von dieser Erkenntnis liegt der Erfindung somit die Aufgabe zugrunde, die bisher auftretenden Farbfehler, insbesondere die des sekundären Spektrums, im Sinne einer Apochromasie zu verbessern, sowie die weiteren oben angeführten Nachteile zu vermeiden und die Baulänge des Zooms klein zu halten.

Gelöst wird diese Aufgabe durch die Verwendung von Materialien (Glassorten) mit speziellen optischen Eigenschaften, sowie besonderer Konstruktionsmerkmale, wie die Geometrie der Grenzflächen und der Luftabstände:

Optisches Glas kann charakterisiert werden durch $n_d$ , $v_d$ , $P_{g,F}$ und $P_{C,t}$, wobei $n_d$ der Brechungsindex,

$$v_d = \frac{n_d - 1}{n_F - n_C}$$ die Abbezahl, $$P_{g,F} = \frac{n_g - n_F}{n_F - n_C}$$ die relative Teildispersion für die Wellenlängen g und F, und

$$P_{C,t} = \frac{(n_C - n_t)}{n_F - n_C}$$ die relative Teildispersion für die Wellenlängen g und t bezeichnen. Für die Mehrzahl der Gläser ("Normalgläser"), gelten näherungsweise die linearen Beziehungen ("Normalgeraden")

$$P_{n\ g,F} = 0.6438 - 0.001628 \cdot v_d,$$

$$P_{n\ C,t} = 0.5450 + 0.004743 \cdot v_d.$$

Die in dieser Erfindung verwendeten Gläser folgen dieser linearen Beziehung nicht. Die Abweichungen der relativen Teildispersionen von der Normalgeraden betragen

$$\left| P_{g,F} - P_{n\ g,F} \right| > 0.001$$

und/oder

$$\left| P_{C,t} - P_{n\ C,t} \right| > 0.002$$

Die verwendeten Gläser sind in Tabelle 1 aufgelistet.

Tabelle 1:

| Material | $n_d$ | $\nu_d$ | Delta $P_{g,F}$ | Delta $P_{C,t}$ |
|---|---|---|---|---|
| A | 1.72342 | 37.95 | 0.0035 | 0.0023 |
| B | 1.49700 | 81.63 | 0.0319 | -0.1133 |
| C | 1.57956 | 53.87 | -0.0012 | -0.0053 |
| D | 1.76182 | 26.52 | 0.0150 | 0.0046 |

Durch die spezielle Wahl der Materialien und die in der nachfolgenden Tabelle 2 beschriebenen Geometrien der Grenzflächen und der Luftabstände (Gase) werden die Farbfehler - insbesondere die des sekundären Spektrums - reduziert und eine Verbesserung im Sinne der Apochromasie sowie eine Reduktion des Astigmatismus und der Planität erreicht. Damit entspricht die Bildfeldwölbung des erfindungsgemäß neuen Zoomsystems annähernd der Bildfeldwölbung des Okulars.

Tabelle 2:

| Grenzfläche | Radius $r_i$/mm | Dicke oder Luftabstand $d_i$ /mm | Material | $n_d$ | $\nu_d$ |
|---|---|---|---|---|---|
| 1 | 29.48 | | | | |
| | | 2.0 | A | 1.72342 | 37.95 |
| 2 | 18.62 | | | | |
| | | 3.5 | B | 1.49700 | 81.63 |
| 3 | -176.25 | | | | |
| | | 31.65...23.18...2.00 | Air | | |
| 4 | -123.57 | | | | |
| | | 2.0 | C | 1.57956 | 53.87 |
| 5 | 12.93 | | | | |
| | | 3.0 | D | 1.76182 | 26.52 |
| 6 | 19.69 | | | | |
| | | 14.70...2.64...15.35 | Air | | |
| 7 | -19.69 | | | | |
| | | 3.0 | D | 1.76182 | 26.52 |
| 8 | -12.93 | | | | |
| | | 2.0 | C | 1.57956 | 53.87 |
| 9 | 123.57 | | | | |
| | | 2.65...23.18...31.65 | Air | | |
| 10 | 176.25 | | | | |
| | | 3.5 | B | 1.49700 | 81.63 |
| 11 | -18.62 | | | | |
| | | 2.0 | A | 1.72342 | 37.95 |
| 12 | -29.48 | | | | |

Im Gegensatz zu herkömmlichen Systemen wird durch die Konstruktionsmerkmale und die spezielle Auswahl der Glassorten für die Linsen des erfindungsgemäßen Zoomsystems eine kurze Baulänge von 70 mm trotz des sehr hohen Zoomfaktors von 6x erreicht. Die Wahl benachbarter Glassorten und entsprechend korrigierter Luftabstände ermöglicht bei grundsätzlich gleichem Aufbau Zoomfaktoren zwischen 5x und 8x bei Baulängen zwischen ca. 60 mm und ca. 100 mm.

Durch die symmetrische Anordnung von je zwei identischen Linsengruppen wird eine - wie an sich bekannt - geringe Vielfalt der Linsengruppen und Einzellinsen erreicht. Insbesondere gilt dies für ein Stereomikroskop, bei dem sich die Zahl der Linsengruppen verdoppelt, weil zwei optische Kanäle parallel ebeneinander verwendet werden.

Das oben beschriebene Zoomsystem kann sowohl bei einem Stereomikroskop mit einem Hauptobjektiv und zwei Teilstrahlengängen als auch bei einkanaligen oder einkanalig stereoskopischen Mikroskopsystemen Verwendung finden. Dabei kann der Linsendurchmesser des Zoomsystems bevorzugt dem Linsendurchmesser des Hauptobjektivs entsprechen.

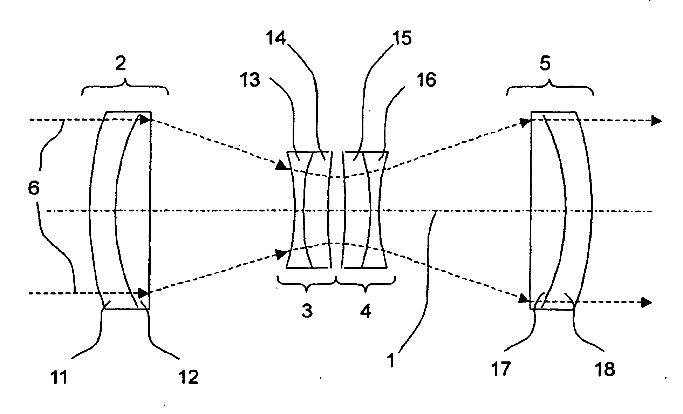

In der Zeichnung wird ein erfindungsgemäßes Zoomsystem für ein Operationsmikroskop schematisch dargestellt.

Das von einem nicht dargestellten Betrachtungsobjekt ausgehende Lichtbündel 6 wird an einer ersten Linsengruppe 2, welche aus zwei Linsen 11 und 12 besteht und eine positive Brechkraft aufweist, auf eine Linsengruppe 3, welche aus zwei Linsen 13 und 14 besteht und eine negative Brechkraft aufweist, gelenkt. Von der Linsengruppe 3 wird das Lichtbündel 6 auf eine Linsengruppe 4, welche aus zwei Linsen 15 und 16 besteht, weitergeleitet und weiter auf eine Linsengruppe 5, die aus je zwei Linsen 17 und 18 besteht, gelenkt. Die Linsengruppen 2, 3, 4 und 5 sind als Kittglieder aus je zwei Einzellinsen ausgebildet. Die Linsengruppen 2 und 5 einerseits, sowie 3 und 4 andererseits sind jeweils identisch und spiegelbildlich angeordnet. Die Linsengruppen 2 und 5 sind unbeweglich angeordnet; die Linsengruppen 3 und 4 sind beweglich gehaltert. Durch die axiale Verschiebbarkeit der Linsengruppen 3 und 4 entlang einer optischen Achse 1 des Zoomsystems wird eine Fokussierung auf das Objekt sowie eine Veränderung der Brennweite möglich.

**Bezugszeichenliste**

1 - optische Achse des Zoomsystems
2 - Linsengruppe 1
3 - Linsengruppe 2
4 - Linsengruppe 3
5 - Linsengruppe 4
6 - Lichtbündel
11 - Linse (Material A)
12 - Linse (Material B)
13 - Linse (Material C)
14 - Linse (Material D)
15 - Linse (Material D)
16 - Linse (Material C)
17 - Linse (Material B)
18 - Linse (Material A)

**Patentansprüche**

**1.** Zoomsystem mit verschiedenen Glassorten und variablen Luftwegen für ein Operationsmikroskop, aufgebaut aus vier symmetrisch, entlang einer gemeinsamen optischen Achse angeordneten Linsengruppen (2 bis 5), wobei je zwei Linsengruppen (2, 5; 3, 4) identisch und spiegelbildlich zueinander angeordnet sind, **dadurch gekennzeichnet, dass** die einzelnen Linsen (11 bis 18) des Zoomsystems folgende geometrische und optische Daten sowie Luftabstände zueinander aufweisen:

| Grenzfläche | Radius $r_i$/mm | Dicke oder Luftabstand $d_i$/mm | Material | $n_d$ | $\nu_d$ |
|---|---|---|---|---|---|
| 1 | 29.48 | | | | |
| | | 2.0 | A | 1.72342 | 37.95 |
| 2 | 18.62 | | | | |
| | | 3.5 | B | 1.49700 | 81.63 |
| 3 | -176.25 | | | | |
| | | 31.65...23.18...2.00 | Air | | |
| 4 | -123.57 | | | | |
| | | 2.0 | C | 1.57956 | 53.87 |
| 5 | 12.93 | | | | |
| | | 3.0 | D | 1.76182 | 26.52 |
| 6 | 19.69 | | | | |
| | | 14.70...2.64...15.35 | Air | | |
| 7 | -19.69 | | | | |

Tabelle fortgesetzt

| Grenzfläche | Radius $r_i$/mm | Dicke oder Luftabstand $d_i$/mm | Material | $n_d$ | $\nu_d$ |
|---|---|---|---|---|---|
| | | 3.0 | D | 1.76182 | 26.52 |
| 8 | -12.93 | | | | |
| | | 2.0 | C | 1.57956 | 53.87 |
| 9 | 123.57 | | | | |
| | | 2.65...23.18...31.65 | Air | | |
| 10 | 176.25 | | | | |
| | | 3.5 | B | 1.49700 | 81.63 |
| 11 | -18.62 | | | | |
| | | 2.0 | A | 1.72342 | 37.95 |
| 12 | -29.48 | | | | |

**2.** Zoomsystem nach Anspruch 1, **dadurch gekennzeichnet, dass** für die verwendeten optischen Gläser die Beziehung zur Normalgeraden beschrieben wird durch

$$\left| P_{g,F} - 0.643 - 0.001628 \cdot \nu_d \right| > 0.006$$

und/oder

$$\left| P_{C,t} - 0.5450 - 0.004743 \cdot \nu_d \right| > 0.008 \text{ mit der Abbezahl } \nu_d.$$

**3.** Zoomsystem nach Anspruch 1 oder 2, **dadurch gekennzeichnet, dass** die Konstruktionsmerkmale für eine Korrektion des sekundären Spektrums ausgelegt sind.

**4.** Zoomsystem nach einem der vorhergehenden Ansprüche, **dadurch gekennzeichnet, dass** die Konstruktionsmerkmale für eine Korrektion des Astigmatismus ausgelegt sind.

**5.** Zoomsystem nach einem der vorhergehenden Ansprüche, **dadurch gekennzeichnet, dass** die Konstruktionsmerkmale für eine Korrektion der Bildfeldwölbung ausgelegt sind.

**6.** Zoomsystem insbesondere nach einem der vorhergehenden Ansprüche, **dadurch gekennzeichnet, dass** durch die Wahl der Glassorten und die Konstruktionsmerkmale die Bildfeldwölbung des Zoomsystems der Bildfeldwölbung des Okulars angepasst ist.

**7.** Mikroskop mit einem Zoomsystem nach einem der Ansprüche 1 bis 6.

**8.** Mikroskop nach Anspruch 7, **dadurch gekennzeichnet, dass** es ein Stereomikroskop ist.

**9.** Mikroskop nach Anspruch 8, **dadurch gekennzeichnet, dass** es ein zweikanaliges Stereomikroskop ist.

**Claims**

**1.** Zoom system having various types of glass and variable air paths for a surgical microscope and constructed from four lens groups (2 to 5) arranged symmetrically along a common optical axis, two lens groups (2, 5; 3, 4) each being arranged identically and in mirror-image fashion relative to one another, **characterized in that** the individual lenses (11 to 18) of the zoom system have the following geometrical and optical data as well as air spaces relative to one another:

| Interface | Radius $r_i$/mm | Thickness or air space $d_i$/mm | Material | $n_d$ | $v_d$ |
|---|---|---|---|---|---|
| 1 | 29.48 | | | | |
| | | 2.0 | A | 1.72342 | 37.95 |
| 2 | 18.62 | | | | |
| | | 3.5 | B | 1.49700 | 81.63 |
| 3 | -176.25 | | | | |
| | | 31.65...23.18...2.00 | Air | | |
| 4 | -123.57 | | | | |
| | | 2.0 | C | 1.57956 | 53.87 |
| 5 | 12.93 | | | | |
| | | 3.0 | D | 1.76182 | 26.52 |
| 6 | 19.69 | | | | |
| | | 14.70...2.64...15.35 | Air | | |
| 7 | -19.69 | | | | |
| | | 3.0 | D | 1.76182 | 26.52 |
| 8 | -12.93 | | | | |
| | | 2.0 | C | 1.57956 | 53.87 |
| 9 | 123.57 | | | | |
| | | 2.65...23.18...31.65 | Air | | |
| 10 | 176.25 | | | | |
| | | 3.5 | B | 1.49700 | 81.63 |
| 11 | -18.62 | | | | |
| | | 2.0 | A | 1.72342 | 37.95 |
| 12 | -29.48 | | | | |

2. Zoom system according to Claim 1, **characterized in that** the relationship to the normals is described as follows for the optical glasses used:

$$|P_{g,F} - 0.643 - 0.001628 \cdot v_d| > 0.006$$

and/or

$$|P_{C,t} - 0.5450 - 0.004743 \cdot v_d| > 0.008$$

with the Abbe number $v_d$.

3. Zoom system according to Claim 1 or 2, **characterized in that** the design features are designed for correcting the secondary spectrum.

4. Zoom system according to one of the preceding claims, **characterized in that** the design features are designed for correcting the astigmatism.

5. Zoom system according to one of the preceding claims, **characterized in that** the design features are designed for correcting the field curvature.

6. Zoom system, in particular according to one of the preceding claims, **characterized in that** the field curvature of the zoom system is adapted to the field curvature of the eyepiece by the selection of the types of glass and by the design features.

7. Microscope having a zoom system according to one of Claims 1 to 6.

8. Microscope according to Claim 7, **characterized in that** it is a stereomicroscope.

9. Microscope according to Claim 8, **characterized in that** it is a dual-channel stereomicroscope.


**Revendications**

1. Système de grossissement comprenant différents types de verre et des voies aériennes variables pour un microscope d'opération, constitué de quatre groupes de lentilles (2 à 5) disposés de manière symétrique le long d'un axe optique commun, deux groupes de lentilles (2, 5 ; 3, 4) étant à chaque fois identiques et disposés selon une symétrie en miroir l'un par rapport à l'autre, **caractérisé en ce que** les lentilles individuelles (11 à 18) du système de grossissement présentent les caractéristiques géométriques et optiques suivantes ainsi que les écarts aériens suivants entre elles :

| Surface de délimitation | Rayon $r_i$/mm | Épaisseur ou écart aérien $d_i$/mm | Matériau | $n_d$ | $v_d$ |
|---|---|---|---|---|---|
| 1 | 29,48 | | | | |
| | | 2,0 | A | 1,72342 | 37,95 |
| 2 | 18,62 | | | | |
| | | 3,5 | B | 1,49700 | 81,63 |
| 3 | -176,25 | | | | |
| | | 31, 65...23, 18...2, 00 | Air | | |
| 4 | -123,57 | | | | |
| | | 2,0 | C | 1,57956 | 53,87 |
| 5 | 12,93 | | | | |
| | | 3,0 | D | 1,76182 | 26,52 |
| 6 | 19,69 | | | | |
| | | 14, 70...2, 64...15, 35 | Air | | |
| 7 | -19,69 | | | | |
| | | 3,0 | D | 1,76182 | 26,52 |
| 8 | -12, 93 | | | | |
| | | 2,0 | C | 1,57956 | 53,87 |
| 9 | 123,57 | | | | |
| | | 2, 65...23, 18...31, 65 | Air | | |
| 10 | 176,25 | | | | |
| | | 3,5 | B | 1,49700 | 81,63 |
| 11 | -18,62 | | | | |
| | | 2,0 | A | 1,72342 | 37,95 |
| 12 | -29,48 | | | | |

2. Système de grossissement selon la revendication 1, **caractérisé en ce que** pour les verres optiques employés, la relation par rapport à droite normale est décrite par

$$|P_{g,F} - 0,643 - 0,001628 \cdot v_d| > 0,006$$

et/ou

$$|P_{C,t} - 0,5450 - 0,004743 \cdot v_d| > 0,008$$

avec le coefficient d'Abbe $v_d$.

3. Système de grossissement selon la revendication 1 ou 2, **caractérisé en ce que** les caractéristiques de construction sont conçues pour une correction du spectre secondaire.

4. Système de grossissement selon l'une des revendications précédentes, **caractérisé en ce que** les caractéristiques de construction sont conçues pour une correction de l'astigmatisme.

5. Système de grossissement selon l'une des revendications précédentes, **caractérisé en ce que** les caractéristiques de construction sont conçues pour une correction de la courbure du champ.

6. Système de grossissement, notamment selon l'une des revendications précédentes, **caractérisé en ce que** l'adaptation de la courbure du champ du système de grossissement à la courbure du champ de l'oculaire s'effectue par le choix du type de verre et des caractéristiques de construction.

7. Microscope équipé d'un système de grossissement selon l'une des revendications 1 à 6.

8. Microscope selon la revendication 7, **caractérisé en ce qu'**il s'agit d'un microscope stéréoscopique.

9. Microscope selon la revendication 8, **caractérisé en ce qu'**il s'agit d'un microscope stéréoscopique à deux canaux.